# FASCICULE DE BREVET EUROPEEN

(11) **EP 0 893 233 B1**
(45) Date de publication et mention de la délivrance du brevet: **10.10.2001**
(21) Numéro de dépôt: 98401779.8
(22) Date de dépôt: 15.07.1998
(51) Int. Cl.: B29C 65/08, H01B 13/00, B29C 63/06, B29C 53/52

(54) **Dispositif pour souder les gaines des faisceaux de fils, notamment pour les automobiles**
Vorrichtung zum Verschweissen von Umhüllungen von Drahtbündeln, insbesondere für Kraftfahrzeuge
Apparatus for welding sheatings of bundles of fibers, namely for cars

(30) Priorité: 25.07.1997 FR 9709496
(43) Date de publication de la demande: 27.01.1999
(73) Titulaire: PLASTO S.A., 21300 Chenôve (FR)
(72) Inventeur: Beaulat, Bernard, 21470 Brazey-en-Plaine (FR)
(74) Mandataire: Hubert, Philippe

(56) Documents cités:
- WO-A-97/26664
- CH-A- 462 445
- DE-A- 2 159 476
- FR-A- 2 256 016
- FR-A- 2 664 850
- FR-A- 2 677 049
- FR-A- 2 743 187
- GB-A- 2 165 485
- US-A- 3 434 906
- US-A- 3 650 009
- US-A- 4 065 342

## Description

La présente invention concerne un outil portatif destiné au façonnage des gaines souples de faisceaux de fils, notamment les faisceaux de fils installés dans les automobiles.

### Art antérieur

Les équipements des appareils industriels et des engins mobiles motorisés, comme par exemple les automobiles, font de plus en plus souvent appel à des commandes électriques et nécessitent de nombreux circuits d'alimentation ou de contrôle. Dans le cas des automobiles, le nombre et la répartition des dispositifs électriques conduisent à la mise en place de réseaux complexes de fils que l'on rassemble sous forme de faisceaux, souvent pourvus d'embranchements. Pour des raisons de commodité de fabrication du véhicule, les faisceaux électriques sont préparés à l'avance dans des ateliers spécialisés : les câbles électriques sont placés sur une table de montage et groupés de façon à former un faisceau que l'on doit maintenir au moyen d'un enrubannage ou d'une gaine de protection. On obtient ainsi un ensemble dont les dimensions et les formes sont prévues pour s'adapter rapidement aux structures de la voiture et qui est plus facile à installer dans le véhicule.

L'enrubannage habituel, qui peut être fait à l'aide d'un ruban de film adhésif, présente des inconvénients importants : le temps de main-d'oeuvre nécessaire est important et l'utilisation de simples films n'apporte pas une protection suffisante des fils. On préfère maintenant former une gaine autour des faisceaux au moyen d'un matériau souple et plus épais de façon à amortir les contacts entre la structure du véhicule et les fils, afin d'éviter les bruits ou l'usure prématurée des protecteurs et isolants des conducteurs. La formation de la gaine souple protégeant le faisceau peut être obtenue soit au moyen d'un banderolage par enroulement d'une bande du matériau en spirale autour du faisceau de fils, soit au moyen d'une bande de matière souple que l'on replie et referme dans le sens de la longueur autour du faisceau. La mise en place du banderolage au moyen d'une bande de matériau souple tel qu'une mousse peut être faite mécaniquement, mais nécessite des machines encombrantes dans lesquelles on doit faire passer le faisceau et que l'on doit recharger fréquemment. La technique du gainage au moyen d'une bande repliée et refermée dans le sens de la longueur est également connue et, selon ce mode d'obtention d'une gaine, la jonction des deux bords de la bande peut être faite soit en collant ou soudant la même face des deux bords (assemblage dit en «drapeau ») soit en assemblant les deux bords par les faces différentes (assemblage en recouvrement).

Bien que l'assemblage en drapeau soit plus facile à fabriquer, notamment dans le cas de l'utilisation d'une bande adhésive où l'on colle en drapeau les deux bords adhésifs l'un contre l'autre, on préfère dans certains cas l'assemblage par recouvrement qui fournit un faisceau gainé plus facile à manipuler et à introduire dans des passages étroits, et plus esthétique. Certains dispositifs permettant de fabriquer des gaines par pliage et assemblage longitudinal des bords d'une bande ont été décrits, comme par exemple GB-1 059 438 selon lequel on dépose un adhésif en continu sur le bord de la bande avant de la former et de l'assembler, ou selon FR-2 664 850 qui enseigne d'utiliser une matière plastique souple thermofusible que l'on soude au moyen d'air chaud. On constate cependant que tous les dispositifs existants sont des machines encombrantes sur lesquelles on doit faire passer les faisceaux de fils que l'on vient de construire sur une table de montage. Cette manipulation nécessaire va à l'encontre du gain de temps que procure la machine, en comparaison avec un enrubannage manuel fait sur la table de montage. De plus, en raison de la croissance incessante du nombre d'accessoires installés dans les véhicules, les faisceaux de conducteurs électriques sont de plus en plus complexes, encombrants et lourds et leur manipulation, en particulier avant gainage, pose de réelles difficultés aux ouvriers. L'une des solutions permettant de remédier à ces inconvénients consiste à gainer le faisceau sans avoir à le déplacer.

WO 97.26664 propose un outil portatif qui utilise un rouleau de bande adhésive et colle les deux bords. Mais l'assemblage par adhésif est coûteux et résiste mal dès que l'on est en présence d'une température élevée. FR-2 743 187 propose un dispositif portatif avec un conformateur fixe et pourvu d'une source d'air chaud pour effectuer la soudure.

On sait par ailleurs qu'il est possible de souder entre elles des matières thermofusibles en utilisant l'énergie des ultrasons, comme décrit par exemple dans les brevets GB-1 044 894, FR-2 115 456 ou EP-B-0 032 703. Les machines décrites pour effectuer les soudures par ultrasons ont fait l'objet de perfectionnements successifs, avec, par exemple, la mise en oeuvre de sonotrodes rotatives qui permettent de souder en continu deux bandes planes de tissu en faisant passer lesdites bandes entre une roue et la périphérie de la sonotrode tournante. Ces perfectionnements sont proposés par exemple par US-3 242 029, FR-1 590 644, DE-1 704 178 ou FR-A-2 677 049.

On connaît également des machines non portables capables de souder une feuille en forme de tube sur un mandrin situé à l'intérieur du tube comme par exemple US 3 434 906 : ce procédé n'est malheureusement pas utilisable pour former une gaine autour d'un objet comme c'est le cas lorsqu'il s'agit d'envelopper un faisceau qui se trouve à l'intérieur de la gaine au moment de l'assemblage.

### Objet de l'invention

La présente invention vise à fournir un dispositif portable permettant la mise en forme et la soudure d'une gaine en matériau thermosoudable autour du faisceau sur la table de montage.

Le dispositif portable selon l'invention se caractérise par l'association d'un conformateur et d'un émetteur d'énergie par ultrasons apte à assurer la thermosoudure des deux bords d'une bande de matériau thermofusible.

Un tel dispositif portable permet de mettre en oeuvre un procédé de gainage de faisceaux de fils qui consiste à utiliser une bande de matériau thermosoudable, la replier longitudinalement autour du faisceau de fils de façon à amener les deux bords de la bande en contact et à souder les deux bords au moyen d'un émetteur d'ultrasons.

L'utilisation d'ultrasons présente l'avantage de délivrer une énergie disponible immédiatement, dès que l'on sollicite le contacteur, et de ne pas avoir d'inertie (il y a très peu d'énergie résiduelle après l'arrêt du contacteur). On améliore ainsi sensiblement la précision du travail effectué tout en réduisant la dissipation inutile d'énergie.

L'utilisation d'un conformateur articulé permet de positionner facilement et rapidement le dispositif portable sur le faisceau puis d'effectuer la soudure par translation le long du faisceau et enfin de retirer l'appareil en ouvrant le conformateur.

### Description détaillée

Le dispositif selon l'invention est un appareil portable à l'aide d'une seule main, muni d'une poignée supportant un organe conformateur capable de mettre en forme une bande de matière souple autour du faisceau de fils de façon à obtenir le rapprochement des deux bords de la bande et un émetteur d'énergie par ultrasons situé dans le voisinage immédiat de la zone de recouvrement des deux bords de la bande et capable de fournir l'énergie nécessaire au thermosoudage des bords de la bande.

En pratique, le conformateur peut prendre différentes formes de réalisation en fonction de la dimension des faisceaux à gainer et/ou de la nécessité de gainer des zones comportant des dérivations. Ainsi, par exemple, le conformateur peut se réduire à un simple guide tube évasé et dans lequel une ouverture est pratiquée pour permettre à la sonotrode de dissiper son énergie sur la gaine. S'il est nécessaire de former la gaine sur un faisceau complexe, il est alors prévu un conformateur formé de deux demi-cônes articulés dont l'ouverture et la fermeture sont commandés par un levier et un mécanisme associés à la poignée de l'appareil, de façon à permettre le gainage de faisceaux équipés de leurs connecteurs et d'éventuels conducteurs en dérivation. De même que précédemment, il est prévu une ouverture dans la zone de jonction des deux bords de la gaine pour permettre le contact entre la sonotrode et le matériau thermosoudable de la gaine. Le conformateur est réalisé de préférence en matière plastique résistant à la température et possédant un bon coefficient de glissement, ou en aluminium.

La sonotrode qui assure la transmission de l'énergie au matériau de gainage est d'un type connu pour les applications de soudage des matières plastiques : on utilise généralement une sonotrode fixe à tête plate ou légèrement creusée pour épouser la forme de la gaine, ladite sonotrode émettant les vibrations ultrasoniques essentiellement dans la direction de son axe de révolution (comme représenté sur les figures). On pourrait également utiliser une sonotrode en forme de corolle et qui serait en contact avec la gaine par sa périphérie, l'émission des ultrasons étant alors principalement diffusée radialement, c'est-à-dire perpendiculairement à l'axe de la sonotrode. Le dispositif portable comprend également le transducteur nécessaire à la mise en vibration de la sonotrode ; les commandes de réglage, les circuits résonnants et le modulateur d'amplitude sont réunis dans un boîtier indépendant fixe. Le générateur de fréquences ultrasonores peut de préférence être équipé d'un accord automatique de fréquence qui optimise les paramètres de réglage en fonction de l'énergie diffusée par la sonotrode vers le matériau à souder.

La sonotrode peut être réalisée en tout matériau habituellement utilisé pour ce type d'appareil ; on préfère toutefois l'aluminium qui présente l'avantage d'être léger et ne pas augmenter le poids du dispositif. La fréquence de travail peut être comprise entre 20 et 60 kHz et on choisit préférentiellement une fréquence proche de 30 à 40 kHz.

Les autres composants du dispositif comprennent la poignée de préhension sur laquelle sont disposés les contacteurs de mise en fonctionnement de l'émission d'ultrasons et le levier de serrage du conformateur. Bien entendu, un câble d'alimentation électrique réunit le dispositif portable et le coffret contenant le générateur de fréquence. Si nécessaire, ce câble peut contenir une alimentation d'air comprimé utilisé sur le dispositif portable pour assister la manoeuvre du conformateur au moyen de micro-vérins et/ou pour accélérer le refroidissement de la zone soudée de la gaine en aval de la sonotrode.

D'autres avantages et caractéristiques ressortiront mieux à la lecture de la description de plusieurs modes de réalisation selon l'invention, ainsi que des dessins annexés sur lesquels :
- la figure 1 est une vue latérale du dispositif selon un premier mode de réalisation ;
- la figure 2 est une vue de dessus du dispositif de la figure 1 ;
- la figure 3 est une vue en perspective du dispositif selon un deuxième mode de réalisation de l'invention ;
- la figure 4 est une vue en perspective du dispositif selon un troisième mode de réalisation de l'invention.

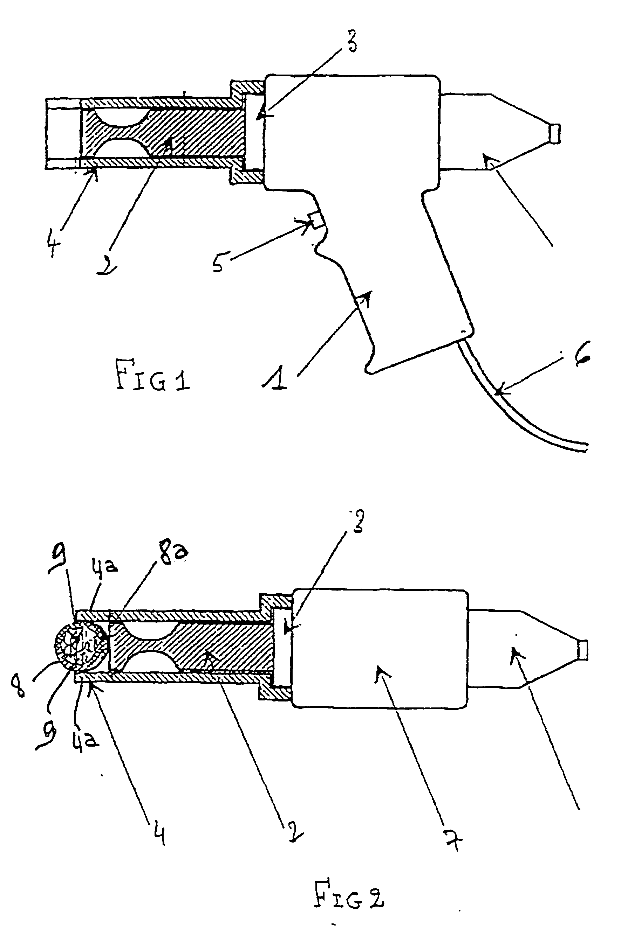

La figure 1 représente une vue de profil ou latérale du dispositif, comprenant une poignée 1, une sonotrode 2, un transducteur 3, un guide conformateur et de maintien 4 de la gaine, un contacteur 5 de mise en fonctionnement des ultrasons et le fil de l'alimentation électrique 6.

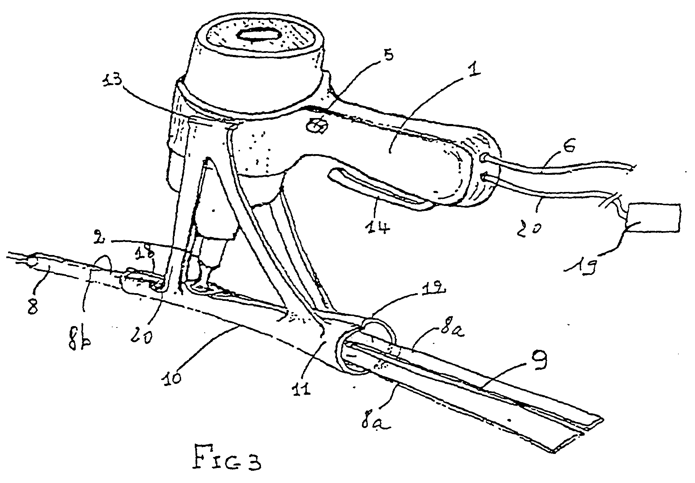

La figure 2 représente le même appareil vu de dessus, avec le corps 7 du dispositif, le guide 4 de maintien de la gaine 8 enroulée autour du faisceau de fils (9), la sonotrode 2 étant en contact direct avec la zone de recouvrement des bords 8a de la gaine 8 en matériau thermosoudable. Dans ce mode de réalisation, le guide conformateur 4 comprend deux demi-coques 4a entourant l'extrémité de la sonotrode 2.

La figure 3 représente une vue en perspective d'un dispositif selon un deuxième mode de réalisation de l'invention comprenant un conformateur tronconique 10 en deux parties semi-tronconiques 11 et 12, maintenues sur deux articulations 13 et commandées par un levier 14 placé sous la poignée 1 qui supporte également le contacteur 5 de mise en fonctionnement de la sonotrode 2 ; le levier 14 rapprochant ou écartant les parties 11 et 12 pour conférer à la gaine 8 la forme souhaitée et faire en sorte que les bords 8a soient correctement disposés pour pouvoir être soudés.

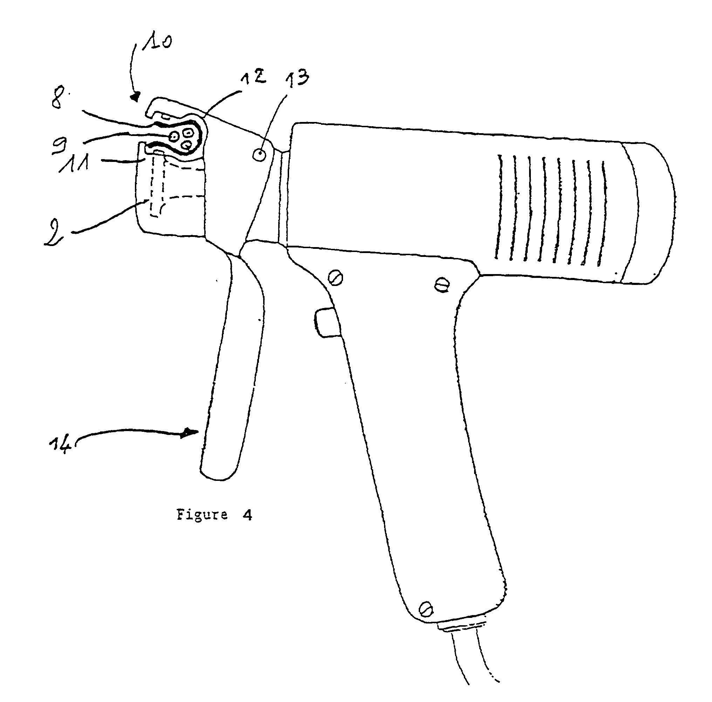

La figure 4 représente une autre réalisation de l'invention, le conformateur 10 ayant ici la forme d'une pince comportant deux mâchoires à profil semi-cylindrique l'une des mâchoires 11 étant pourvue de la sonotrode 2 pour souder les bords de la bande 8 en forme de drapeau autour du faisceau de fils 9. La mâchoire 12 articulée autour de l'axe 13 est actionnée par le levier 14 qui déclenche simultanément le fonctionnement de la sonotrode 2. On comprend qu'avec ce dispositif, il est extrêmement facile et rapide de positionner la pince autour du faisceau pour effectuer le gainage.

Le dispositif selon l'invention est utilisé pour confectionner des gaines autour de faisceaux de fils à partir d'une bande de matériau thermosoudable.

Parmi ces matériaux on peut citer les mousses de polyéthylène, les mousses de polypropylène en feuille de 1 à 4 mm d'épaisseur. Si nécessaire, et notamment dans le cas de faisceaux de dimensions importantes, on peut utiliser des matériaux multicouches comprenant une ou deux feuilles de mousse de polyoléfine thermosoudable renforcée par un film, un non-tissé ou une grille d'un matériau de synthèse susceptible d'améliorer la résistance mécanique de la gaine.

Dans le cas de l'utilisation d'un dispositif comprenant un conformateur simple composé de deux demi-coques de guidage telles que représentées sur les figures 1 et 2, on effectue le gainage au moyen d'un matériau préformé (par exemple par thermoformage préalable) qui se présente comme un tube fendu dont on écarte les bords pour introduire le faisceau et dont le pouvoir élastique est suffisant pour que le tube se referme seul autour du faisceau. Dans ce cas, le rôle du conformateur est réduit aux simples actions de resserrage et de guidage de la gaine devant la sonotrode.

Si l'on utilise un ruban de matériau de gainage non préformé, il est préférable de mettre en oeuvre un dispositif du type de celui représenté suivant la figure 3 qui permet de conformer la bande positionnée sous le faisceau en forme d'une gaine et de souder les deux bords réunis en superposition au-dessus du faisceau, ou un dispositif tel que représenté par la figure4 qui approche les deux bords et les soude en forme de drapeau.

Dans le cas de faisceaux présentant des dérivations, les câbles dérivés du faisceau sont de préférence passés dans des orifices prévus sensiblement au milieu de la bande destinée à former la gaine : le câble dérivé sera ainsi extrait du faisceau dans une zone diamétralement opposée à la jonction soudée : on aura ainsi une continuité du cordon de soudure et le passage du fil dérivé se fera sans difficulté dans le conformateur soit dans la zone d'extrémité libre du conformateur représenté figure 2, soit dans la fente inférieure séparant les deux parties semi-tronconiques du conformateur représenté à la figure 3. Le gainage des dérivations peut être fait ensuite de façon analogue au gainage du faisceau principal.

Dans le cas de l'appareil représenté à la figure 4, les câbles en dérivation sont passés entre les deux bords, en desserrant légèrement la pince au moment du gainage de la partie concernée par la dérivation.

En opérant comme indiqué ci-dessus, on voit que toute l'opération de gainage du faisceau peut être faite sans déplacer ce dernier, à la seule condition de pouvoir passer les fragments de bande ou de gaine préformée sous les câbles. On réduit ainsi sensiblement la difficulté du gainage, notamment dans le cas des faisceaux de dimensions importantes.

De façon pratique, le gainage peut être exécuté directement sur la table de montage, ce qui présente l'avantage de pouvoir laisser le faisceau connecté aux circuits de contrôle et d'effectuer un ultime contrôle des conducteurs après le gainage qui correspond à la phase finale de la fabrication du faisceau.

L'utilisation du dispositif portable selon l'invention apporte un progrès notable pour le gainage des faisceaux de fils électriques dans les automobiles. Il trouve également son application dans d'autres domaines nécessitant le regroupement et la protection de groupes de fils, de tubes tels que les liaisons pneumatiques ou fluides, de fibres optiques, notamment dans le domaine de l'automatisme ou de la transmission d'information.

Le dispositif étant portable, il est également possible d'effectuer le gainage de faisceaux de fils déjà installés - par exemple les réseaux d'installations de commande-contrôle ou les réseaux informatiques industriels. Le gainage, qui, bien souvent, réduit considérablement les possibilités de corrections ultérieures, peut n'être fait qu'après avoir contrôlé le bon fonctionnement de toute l'installation.

Suivant une autre caractéristique de la présente invention, le dispositif peut comprendre des moyens de refroidissement 18 accéléré de la zone soudée 8a de la gaine 8, par exemple au moyen d'air comprimé délivré par une source 19 reliée par une tubulure 20 auxdits moyens 18 (figure 3).

## Revendications

1. Dispositif portable pour le gainage des faisceaux de fils (9), du type comprenant un ruban de matériau thermosoudable sur lequel est disposé ledit faisceau de fils (9), un guide-conformateur (4, 10, 15) apte à replier ledit ruban longitudinalement autour dudit faisceau de manière à amener les deux bords dudit ruban en contact l'une de l'autre, et un moyen de thermosoudage **caractérisé en ce que** le guide conformateur comprend deux parties articulées et le moyen de thermosoudage (2) est un émetteur d'ultrasons.

2. Dispositif portable selon la revendication 1, **caractérisé en ce que** l'émetteur d'ultrasons (2) est une sonotrode fixe à émission axiale.

3. Dispositif portable selon la revendication 1 **caractérisé en ce que** l'émetteur d'ultrasons est une sonotrode à émission radiale.

4. Dispositif portable selon l'une des revendications 1 à 3, **caractérisé en ce que** le guide conformateur (4) comprend deux demi-coques (11, 12) à proximité de l'extrémité (2a) de la sonotrode.

5. Dispositif portable selon l'une des revendications 1 à 3, **caractérisé en ce que** le guide conformateur (10) comprend deux parties semi-tronconiques articulées (11, 12), et commandées par un levier (14) solidaire de la poignée (1) dudit dispositif portable.

6. Dispositif selon l'une quelconque des revendications 1 à 5 **caractérisé en ce que** le dispositif comprend en outre des moyens de refroidissement (18) accéléré de la zone soudée de la gaine, au moyen d'air comprimé.

## Claims

1. A portable device for sheathing bundles of wires (9), the device being of the type comprising a tape of heat-sealable material having said bundle of wires (9) deposited thereon, a shaper-guide (4, 10, 15) suitable for folding said tape longitudinally around said bundle so as to bring the two edges and of said tape into contact with each other, and heat-sealing means, the device being **characterized in that** the shaper-guide has two portions that are hinged to each other and **in that** the heat-sealing means (2) is an ultrasound emitter.

2. A portable device according to claim 1, **characterized in that** the ultrasound emitter (2) is an axial emission fixed sonotrode.

3. A portable device according to claim 1, **characterized in that** the ultrasound emitter is a radial emission sonotrode.

4. A portable device according to any one of claims 1 to 3, **characterized in that** the shaping guide (4) comprises two half-shells (11, 12) close to the end (2*a*) of the sonotrode.

5. A portable device according to any one of claims 1 to 3, **characterized in that** the shaping guide (10) comprises two hinged-together semi-frustoconical portions (11, 12), controlled by a lever (14) secured to the handle (1) of said portable device.

6. A device according to any one of claims 1 to 5, **characterized in that** the device further comprises means (18) for accelerated cooling of the heat-sealed zone of the sheath, by means of compressed air.

## Patentansprüche

1. Tragbare Vorrichtung zum Umhüllen von Drahtbündeln (9) von der Art, welche ein Band aus heißsiegelbarem Werkstoff aufweist, auf welchem das Drahtbündel (9) angeordnet wird, sowie ein Führungs- und Formteil (4, 10, 15), welches zum Umschlagen des Bandes um das Bündel in Längsrichtung in der Weise geeignet ist, dass es die beiden Kanten des Bandes miteinander in Berührung bringt, und ferner eine Heißsiegeleinrichtung, **dadurch gekennzeichnet, dass** das Führungs- und Formteil zwei angelenkte Abschnitte aufweist und die Heißsiegeleinrichtung (2) ein Ultraschallschwinger ist.

2. Tragbare Vorrichtung nach Anspruch 1, **dadurch gekennzeichnet, dass** der Ultraschallschwinger (2) eine feststehende Sonotrode mit axialer Abstrahlung ist.

3. Tragbare Vorrichtung nach Anspruch 1, **dadurch gekennzeichnet, dass** der Ultraschallschwinger eine Sonotrode mit radialer Abstrahlung ist.

4. Tragbare Vorrichtung nach einem der Ansprüche 1 bis 3, **dadurch gekennzeichnet, dass** das Führungs- und Formteil (4) zwei Halbschalen (11, 12) in der Nähe des Endes (2a) der Sonotrode aufweiset.

5. Tragbare Vorrichtung nach einem der Ansprüche 1 bis 3, **dadurch gekennzeichnet, dass** das Führungs- und Formteil (10) zwei angelenkte halb-kegelstumpfförmige Abschnitte (11, 12) aufweist, die mittels eines fest mit dem Handgriff (1) der tragbaren Vorrichtung verbundenen Hebels (14) betätigt werden.

6. Vorrichtung nach einem der Ansprüche 1 bis 5, **dadurch gekennzeichnet, dass** die Vorrichtung des weiteren Einrichtungen (18) zur beschleunigten Abkühlung des geschweißten Bereichs der geschweißten Ummantelung unter Verwendung von Druckluft aufweist.
